# EUROPEAN PATENT SPECIFICATION

(11) **EP 3 750 393 B1**
(45) Date of publication and mention of the grant of the patent: **02.08.2023**
(21) Application number: 20179163.9
(22) Date of filing: 10.06.2020
(51) Int. Cl.: A01D 41/14, A01D 61/00

(54) **THREE-SECTION CROP HEADER WITH DRAPERS AND TOP CROSS AUGER**
ERNTEVORSATZ MIT DREI ABSCHNITTEN MIT SCHNEIDWERKEN UND OBERER QUERFÖRDERSCHNECKE
TETE DE RECOLTE À TROIS SECTIONS COMPORTANT DES TABLIERS ET UNE VIS SANS FIN TRANSVERSALE SUPÉRIEURE

(30) Priority: 13.06.2019 CA 3046527
(43) Date of publication of application: 16.12.2020
(73) Proprietor: MacDon Industries Ltd., Winnipeg Manitoba R3J 3S3 (CA)
(72) Inventor: Rheal, Remillard, St. Joseph, Manitoba (CA); Talbot, Francois R., Winnipeg, Manitoba R2N 3M5 (CA)
(74) Representative: FARAGO Patentanwälte GmbH

(56) References cited:
- EP-A2- 2 710 879
- EP-A2- 3 434 096
- CA-A1- 2 810 861
- US-A1- 2018 368 320

## Description

This invention relates to a harvesting header with a center section and two wing sections pivotal relative to forwardly extending pivot axes where the crop is transported from the cutter bar inwardly by two side drapers and there is provided a top cross auger along a top edge of a back sheet to assist in carrying tall crop inwardly.

### BACKGROUND OF THE INVENTION

In published US Application 2018/0368320 published December 27 2018 is disclosed a header defining a cutting system for attachment to a combine harvester with a three-part frame, the frame parts of which are articulately joined with each other to define a center part and two wing parts. The header further includes, a cutter bar, a reel, a central belt conveyor system or feed draper as well as lateral belt conveyor systems or side drapers for disposing of the crop material that are supported on the frame, such that the side drapers convey transversely to the direction of travel in the direction of the central belt conveyor system, and the central belt conveyor system conveys contrary to the direction of travel. The header includes a multi-part rear wall of the cutting system mounted on the individual frame parts, which extends along the rear of the side drapers and which includes a discharge opening for discharging the harvested crop to the combine harvester in the area of the central belt conveyor system.

The key part of this disclosure relates to the provision of a three-part screw conveyor or auger which extends across the operating width of the cutting system or cutter bar and is arranged above the side drapers and between the reel and the rear wall, and in particular that the length of the respective parts of the screw conveyor or auger correspond to the width of the three frame parts that is the center frame and the two wing frames. This corresponding width is selected so that swinging movements of the three frame parts with respect to each other, have no or only small differences in length, which can be compensated for via respective bearings in a simple and cost-effective manner.

European Patentapplication EP 3 434 096 A2 discloses a draper platform for mounting on a feeder house of an agricultural combine may include a frame, a center belt conveyor to carry cut crop material rearwardly towards a center opening in the frame through which crop may be fed into a feeder house, a left side belt conveyor to carry cut crop material to the center belt conveyo, a right side belt conveyor to carry cut crop material to the center belt conveyor , at least one elongate reciprocating knife assembly extending along a front edge of each of the center belt conveyor, the left side belt conveyor and the right side belt conveyor, a left side top cross auger above the left side belt conveyor, the left side top cross auger having a right inner end, a right side top cross auger above the right side belt conveyor, the right side top cross auger having a left inner end opposite to and spaced from the right inner end and a conveyor drum above the center belt conveyor below a space between the right inner end and the left inner end.

Of course, as in all arrangements of this type where the auger or screw conveyor is divided into separate sections, the screw conveyor parts are connected by a joint drive, and adjacent parts of the screw conveyor are mutually connected by way of universal joints.

### SUMMARY OF THE INVENTION

According to the invention there is provided a harvesting header for attachment to transport vehicle comprising:
a main frame having a coupling for mounting on the transport vehicle by which the header is carried on the transport vehicle in a forward direction;
a cutter bar at a forward end of the main frame;
a crop transfer system for transferring cut crop comprising first and second side drapers movable in a direction transverse to the forward direction with each side draper having a front edge adjacent the cutter bar;
the main frame having a center portion at the coupling and first and second wing portions each connected to a respective end of the center portion for pivotal movement relative to the center portion about a respective one of first and second pivot axes each generally parallel to the forward direction with the first and second axes lying in a plane at or adjacent the cutter bar;
a rear wall located at a rear edge of the side drapers and extending upwardly therefrom to a top edge of the rear wall;
and an auger located adjacent the top edge of the rear wall comprising an auger flight mounted on a longitudinally extending elongate rotatable member arranged such that rotation of the member drives the flight in a direction to carry crop inwardly toward a center of the header;
wherein the auger comprises three sections arranged end to end along the rear wall including a center section with a center flight, a first end section with a first end flight and a second end section with a second end flight;
wherein the first end section is connected to a first end of the center section by a first joint and the second end section is connected to a second end of the center section by a second joint;
where each of the first and second joints acts to transfer rotation from one section to another section at the joint;
where each of the first and second joints allows movement of said one section relative to the other section in a direction longitudinally of the auger;
where each of the first and second joints allows change of an angle of an axis of the member of one section relative to an axis of the member of the other section at the joint;
wherein the first joint is arranged at a position spaced inwardly of the first axis and the second joint is arranged at a position spaced inwardly of the second axis.

In one arrangement, the rear wall is separated at the first and second pivot axes into a center wall portion and first and second wing wall portions so that a first space between a center wall portion and a first wing wall portion increases and decreases as the center portion and first wing portion pivot in clockwise and counter clockwise directions about the first pivot axis and so that a second space between the center wall portion and a second wing wall portion increases and decreases as the center portion and second wing portion pivot in clockwise and counter clockwise directions about the second pivot axis, wherein the first flight extends past the first space to carry the crop engaging the first flight past the first space to the center portion of the rear wall and wherein the second flight extends past the second space to carry the crop engaging the second flight past the second space to the center portion of the rear wall.

Not all headers that use the three piece auger have a split rear wall of the draper deck. While some do have this feature, the only split that exists in all configurations that use a three piece auger is the frame hinge axis.

Typically the header also includes a reel carried on reel arms mounted on the main frame and extending forwardly over the cutter bar, where the reel includes a first reel arm mounted on a first end of the center portion and a second reel arm mounted on the second end of the center portion. In this arrangement preferably the first flight extends also past the first reel arm and the support structure therefor and the second flight extends past the second reel arm and the support structure therefor. Again this avoids hang up of the crop at the junction point between the center and wing sections.

Yet further, typically the reel is divided into a center reel portion and first and second reel portions at respective ends of the center reel portion, where each reel portion has a plurality of tine bars at angularly spaced locations therearound where the tine bars of the center portion terminate at the first end in a first radial plane of the center portion and the tine bars of the center portion terminate at the second end in a second radial plane of the center portion. In this arrangement preferably the first flight extends past the first radial plane and the second flight extends past the second radial plane again to improve crop transfer past these potential hang up locations. In some cases the ends of the tine bars are connected by an end ring of the reel which supports the ends.

The three piece auger is intended for any header that could have a three piece reel, but it is also used on configurations of those same headers with only a two piece reel, so the reel split is not always present at the split in the auger. when the auger is used with a three piece reel, having it inboard of the reel split, reel support structure and arm, and frame hinge axis is beneficial.

In the present invention as defined therefore, the position of the joint in the auger is defined only in relation to the frame hinge axis. Optionally the joint in the auger also extends past the reel support arms and the mounting structure therefor including the operating cylinders, the split in the reels and the split in the rear wall of the draper decks where applicable.

Thus in the present invention the joints between the sections of the auger are arranged such that they are not aligned with the pivot points of the frame sections. Instead the auger sections of the wings are increased in length so that the crop is carried past the junction between the wing and the center section to avoid collection of the crop at a common junction point as in prior art arrangements.

In a preferred arrangement, the first joint includes a first mounting bracket carried on the first end of the center portion where the first joint is fixed to the center section of the auger, wherein the second joint includes a second mounting bracket carried on the second end of the center portion where the second joint is fixed to the center section of the auger, and wherein the first and second joints allow longitudinal sliding movement of the first and second wing frame sections of the auger relative to the first and second joints to accommodate pivotal movement of the portions of the header. Preferably in this arrangement the flight of the center section of the auger is removable and replaceable from the first and second joints. This allows the center section to be replaced for a different effect on the crop where there is provided at least two center sections with different flight dimensions.

Preferably the auger is driven from the first end so that the center section and second wing sections are driven through the first and second joints.

### BRIEF DESCRIPTION OF THE DRAWINGS

One embodiment of the invention will now be described in conjunction with the accompanying drawings in which:
Figure 1 is a top plan view of a header according to the present invention.

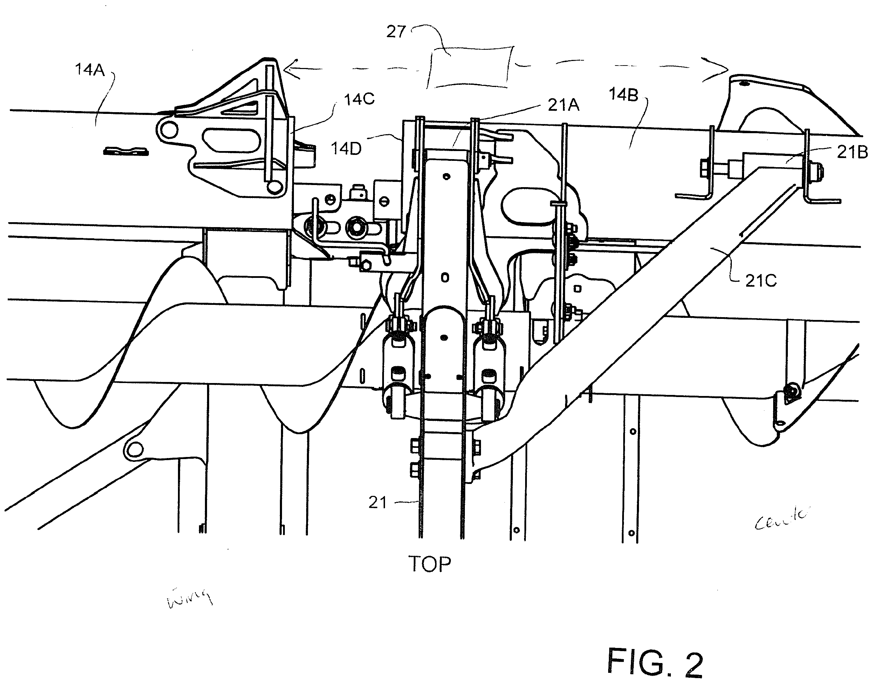

Figure 2 is a top plan view of the header of Figure 1 showing on an enlarged scale the section adjacent the joint between the wing section and the center section with the reel omitted for convenience of illustration.
Figure 3 is a front elevational view of the section of the header of Figure 2.
Figure 4 is a cross sectional view along the lines 4-4 of Figure 3.
Figures 5 is a top plan view of the section of Figure 2 showing the reel, the connection between the reel sections at the joint and the relationship to the auger.

In the drawings like characters of reference indicate corresponding parts in the different figures.

### DETAILED DESCRIPTION

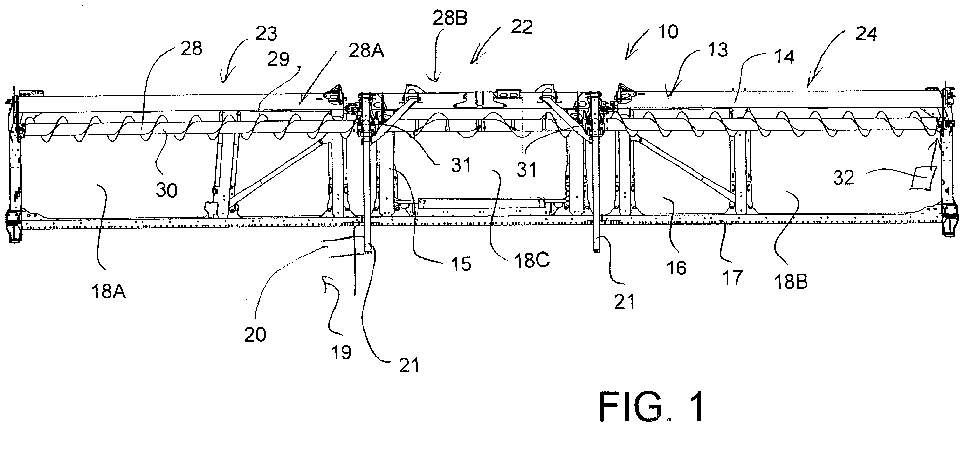

In Figure 1 is shown in plan view a header 10 of the type shown and described in US patent 7,918,076 (Talbot) assigned to the present applicant and issued on April 5 2011 which is carried on an adapter (not shown) or mounting assembly attached to the feeder house of a combine harvester. The header 10 includes a frame 13 defined by a main rear beam 14 and a plurality of forwardly extending arms 15 which extend downwardly from the beam 14 and then forwardly underneath a table 16 which extends across the header. At the forward end of the table 16 is provided a cutter bar 17. On top of the table 16 is provided a draper transport system 18 which carries the crop from the cutter bar across the header to a discharge location at the feeder house 12. The draper system 18 thus include two side drapers 18A extending from respective ends of the header inwardly toward the feeder house and a center adapter section 18C which acts to feed the crop from the side drapers 18A rearwardly to the feeder housing.

The header further includes a reel 19 including a beam 20 on which is mounted a plurality of reel bats (not shown) which are carried on the beam for rotation with the beam around the axis of the beam. The beam is carried on reel support arms 21 which extend from the beam rearwardly and upwardly to a support bracket attached to the transverse main beam 14. The reel arms can be raised and lowered by hydraulic cylinders (not shown) connected between the respective arm and the beam 14.

In the embodiment shown the reel is mounted on four arms 21 including two arms at the ends of the header and a two center arms being spaced apart either side of the adapter 11. It is well known to provide an arrangement of the beam and the bats which accommodate flexing movement of the reel so that one end can be higher than the other end without damaging the bats or the reel structure. Various different arrangements for accommodating such flexing movement are known and can be incorporated into the arrangement described herein, as is well known to one skilled in the art.

The main frame has the adapter or coupling for mounting on the transport vehicle by which the header is carried on the transport vehicle in a forward direction.

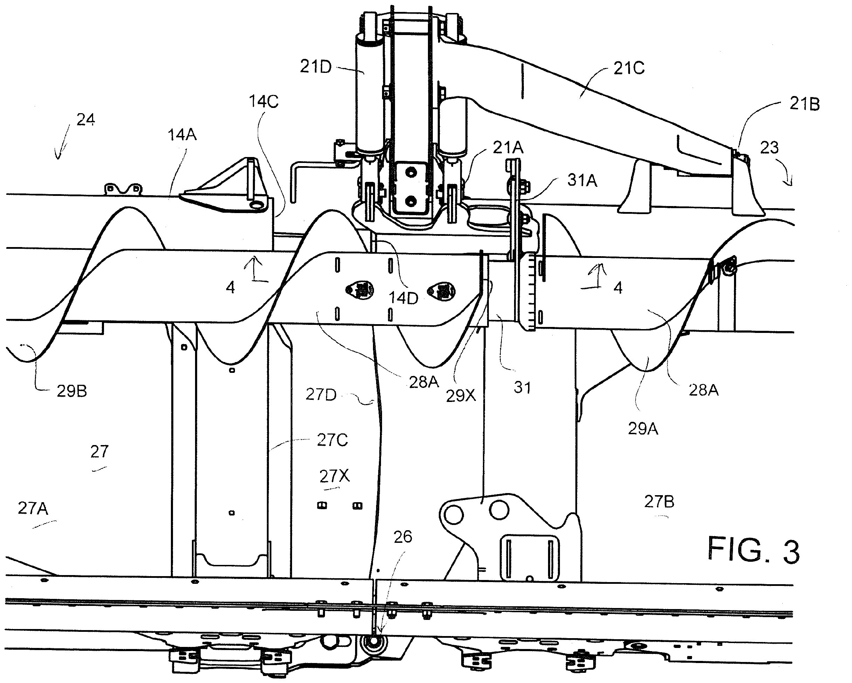

As described in detail in the above patent, the main frame has a center portion 23 at the coupling and first and second wing portions 24, 25 each connected to a respective end of the center portion for pivotal movement relative to the center portion about a respective one of first and second pivot axes each generally parallel to the forward direction with the first and second axes lying in a plane at or adjacent the cutter bar. The pivot axis at one side is shown specifically at the coupling 26 in Figure 3 which is located at the rear of the frame and aligned with the cutter bar and acts to support the wing section while allowing pivotal movement of the wing section around the pivot 26. A balance mechanism indicated schematically at 27 and described in detail in the cited patent lifts the wing section with a required lift force which is balanced relative to the lift force applied to the center section by the adapter to apply a required force to the ground during the harvesting action. Full details of this system are described in the above patent.

The pivotal movement which occurs to follow ground contour provides pivotal movement of the center and wing frame parts to that a space between the main beam portions 14A and 14B of the main beam 14 increases and decreases at the ends 14C and 14D.

A rear wall 27 is located at a rear edge of the side drapers and extends upwardly therefrom to a top edge of the rear wall at the main beam 14. Again the rear wall is separated at the first and second pivot axes into a center wall portion 27B and first and second wing wall portions 17A with a space 27X between the end edges 27C and 27D of those wall portions. Again therefore the space between the center wall portion 27B and a first wing wall portion 27A increases and decreases as the center portion and first wing portion pivot in clockwise and counter clockwise directions about the pivot axis 26.

The rear wall has a bottom edge just behind the rear edge of the side drapers and extends upwardly and rearwardly from the side drapers to confine the crop at the rear of the header.

As is well known, an auger 28 is located adjacent the top edge of the rear wall and includes an auger flight 29 mounted on a longitudinally extending elongate rotatable tube 30 arranged such that rotation of the tube in a direction forwardly and downwardly acts to drive the flight in a direction to carry crop inwardly toward a center of the header.

The auger 28 comprises three sections arranged end to end along the rear wall including a center section 28A with a center flight 29A, a first end section 28B with a first end flight 29B and a second end section with a second end flight. The end sections are connected to first and second ends of the center section 28A by joints 31 which act to transfer rotation from one section to another section at the joint so that the auger is driven from one end at a drive mechanism schematically indicated at 32.

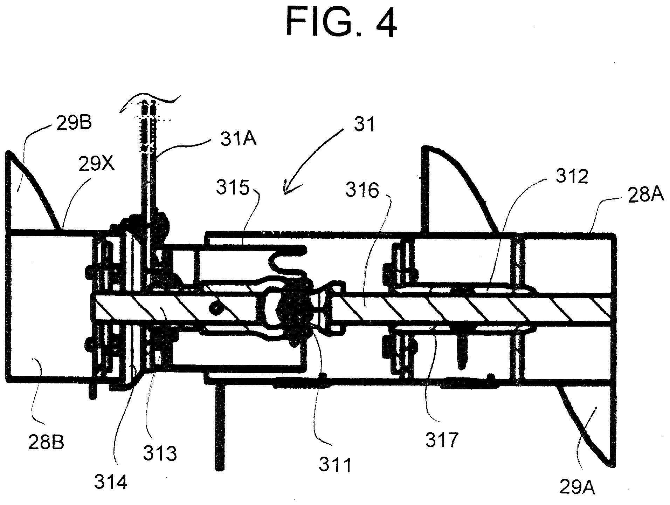

The joints as best shown in Figure 4 include a universal coupling and a slide coupling which allow each of the first and second joints to provide movement of said one section relative to the other section in a direction longitudinally of the auger and change of an angle of an axis of the member of one section relative to an axis of the member of the other section at the joint.

Thus as shown in Figure 4 each joint 31 comprises a universal coupling 311 and a slide coupling 312 housed within the tube of the auger portion 28A. Each joint 31 therefore includes a mounting bracket 31A carried on the first end of the center portion of the frame. The joint 31 is fixed by the bracket or plate 31A to the outer end of the center section of the frame at the first wing section of the auger. The joints 31 allow longitudinal sliding movement of the wing sections of the auger relative to the first and second joints to accommodate pivotal movement of the portions of the header.

The plate 31A is fastened to the portion 28B of the auger by a shaft 313 bolted to an end plate 314 of the tube of the portion 28B. the shaft 313 extends outwardly from the end of the tube within a sleeve 315 which projects into the end of the tube of the portion 28A. the sleeve 315 houses the universal coupling 311 which connects to a shaft 316 within the tube of the portion 28A. The universal joint holds the shafts 313 and 316 end to end while communicating rotational movement through the coupling and while allowing limited changes of angle between the shafts to accommodate the relative movement between the portions 28A and 28B of the auger. The shaft 316 passes through a bushing 318 forming the slide coupling 312 so that the portions 28A and 28B can move toward one another and apart over a limited distance to accommodate a change in distance of the outer end mounting of the portion 28B and the portion 28A. the bushing 318 is mounted at a fixed position on the axis of the portion 28A of the auger and is held against sliding movement therealong so that the sliding movement required is provided by the movement of the shaft in the bushing. The flights 29A and 29B extend as far along the respective auger portion as close to the bracket or plate 31A as possible to assist in transfer of crop across the area at the bracket 31A.

As best shown in Figure 3, the joints 31 are arranged at a position spaced inwardly of the first axis 26 so that the first flight 29B extends past the first space 27X to carry the crop engaging the first flight past the first space 27X to the center portion 27B of the rear wall 27. Thus the end edge 29X of the flight 29B is located inwardly of the edge 27B of the rear wall and inwardly of the end edge 14D of the main beam so as to carry the crop past the edges and the obstacle to movement caused thereby and onto the rear wall portion of the center section.

The reel 19 includes first reel arms 21 mounted on the ends of the center portion just inside the end edge 14D on the main beam. The arm is mounted on a pivot mounting 21A on the beam and is braced by an angle brace member 21C pivotally mounted also on the main beam 14. The arm can be raised and lowered by cylinders 21D.

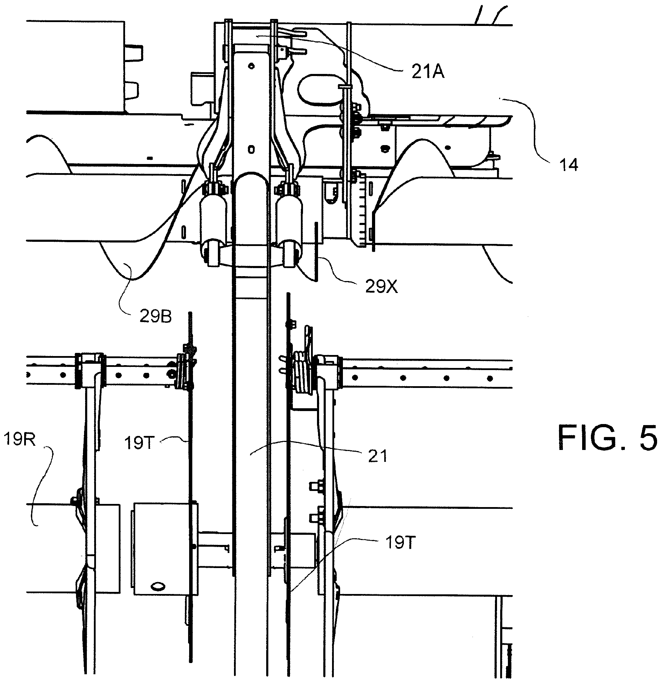

As shown in Figure 5, the reel beams are mounted each on a respective side of the arm 21 so as to leave a space between the reels at the arms. Each reel includes as conventional a plurality of bats 19R at spaced positions around the main beam of the reel. The bats carry tine fingers 19S. The ends of the bats are mounted on an end disk 19T located just at the side of the arm 21.

In view of its length extending onto the center section, the first flight 29B extends past the first reel arm 21 and past the first radial plane containing the disk 19T. Thus the end edge 29X of the flight is inward of the plane of the disk 19T on the side of the arm 21 at the center section.

The flighting of the center section of the auger is removable and replaceable from the first and second joints so that there can be provided at least two center sections with different flight dimensions.

## Claims

1. A harvesting header (10) for attachment to a transport vehicle comprising:
a main frame (13) having a coupling for mounting on the transport vehicle by which the header (10) is carried on the transport vehicle in a forward direction;
a cutter bar (17) at a forward end of the main frame (13);
a crop transfer system (18) for transferring cut crop comprising first and second side drapers (18A, 18B) movable in a direction transverse to the forward direction with each side draper (18A, 18B) having a front edge adjacent the cutter bar (17) and a center draper (18C) disposed between said first and second side drapers (18A, 18B);
the main frame (13) having a center portion (23) at the coupling and first and second wing portions (24, 25) each connected to a respective end of the center portion (23) by pivots (26) defining first and second pivot axes (26) for pivotal movement relative to the center portion (23) about a respective one of the first and second pivot axes (26) each generally parallel to the forward direction with the first and second pivot axes (26) lying in a plane at or adjacent the cutter bar, said center portion (23) supporting said center draper (18C) and said first and second wing portions (24, 25) supporting said respective first and second side drapers (18A, 18B);
a rear wall (27) located at a rear edge of the side drapers (18A, 18B) and extending upwardly therefrom to a top edge of the rear wall (27);
and an auger (28) located adjacent the top edge of the rear wall (28) comprising an auger flight (29) mounted on a longitudinally extending elongate rotatable member (30) arranged such that rotation of the member (30) drives the auger flight (29) in a direction to carry crop inwardly toward a center of the header (10);
wherein the auger (28) comprises three sections arranged end to end along the rear wall (28) including a center section (28A) with a center flight (29A), a first end section (28B) with a first end flight (29B) and a second end section with a second end flight;
wherein the first end section (28B) is connected to a first end of the center section (28A) by a first joint (31) and the second end section is connected to a second end of the center section (28A) by a second joint;
where each of the first and second joints (31) acts to transfer rotation from one section to another section at the joint (31);
where each of the first and second joints (31) allows movement of said one section relative to the other section in a direction longitudinally of the auger (28);
where each of the first and second joints (31) allows change of an angle of an axis of the member of one section relative to an axis of the member of the other section at the joint (31); and **characterized by**:
the first joint (31) is arranged at a position spaced inwardly of the first axis (26) and above said center draper (18C) and the second joint (31) is arranged at a position spaced inwardly of the second axis and above said center draper (18C); and
a reel (19) carried on reel arms (21) mounted on the main frame (13) and extending forwardly over the cutter bar (17), wherein the reel (19) includes a first reel arm (21) mounted on a first end of the center portion (23) and a second reel arm (21) mounted on the opposite second end of the center portion (23) and wherein the first flight (29B) extends inboard of the first reel arm (21) and the second flight extends inboard of the second reel arm (21).

2. The harvesting header (10) according to claim 1 wherein the rear wall (27) is separated at the first and second pivot axes (26) into a center wall portion (27B) and first and second wing wall portions (27A) so that a first space (27X) between the center wall portion (27B) and a first wing wall portion (27A) increases and decreases as the center portion (27B) and first wing portion (27A) pivot in clockwise and counter clockwise directions about the first pivot axis (26) and so that a second space between the center wall portion and a second wing wall portion increases and decreases as the center portion and second wing portion pivot in clockwise and counter clockwise directions about the second pivot axis, wherein the first flight (29B) extends inboard of the first space (27X) to carry the crop engaging the first flight (29B) past the first space (27X) to the center wall portion (27B) of the rear wall (27) and wherein the second flight extends inboard of the second space to carry the crop engaging the second flight past the second space to the center wall portion (27B) of the rear wall (27).

3. The harvesting header (10) according to any one of claims 1 to 2 including a reel (19) carried on reel arms (21) mounted on the main frame (13) and extending forwardly over the cutter bar (17), wherein the reel (19) is divided into a center reel portion and first and second reel portions at respective ends of the center reel portion, wherein each reel portion has a plurality of tine bars at angularly spaced locations therearound where the tine bars of the center portion terminate at the first end in a first radial plane of the center portion and wherein the tine bars of the center portion terminate at the second end in a second radial plane of the center portion and wherein the first flight extends past the first radial plane and the second flight extends past the second radial plane.

4. The harvesting header according to any one of claims 1 to 3 wherein the first joint (31) includes a first mounting bracket (31A) carried on the first end of the center portion (23) where the first joint (31) is fixed to the center section (28A) of the auger (28), wherein the second joint (31) includes a second mounting bracket carried on the second end of the center portion (23) where the second joint (31) is fixed to the center section (28A) of the auger (28), and wherein the first and second joints (31) allow longitudinal sliding movement of the first and second end sections of the auger (28) relative to the first and second joints (31) to accommodate pivotal movement of the portions of the header (10).

5. The harvesting header (10) according to claim 4 wherein the flight (29A) of the center section (28A) of the auger (28) is removable and replaceable from the first and second joints (31).

6. The harvesting header (10) according to claim 5 wherein there is provided at least two center sections (28A) with different flight dimensions.

7. The harvesting header (10) according to any one of claims 1 to 6 wherein the auger (28) is driven from the first end so that the center section (28A) and end sections (28B) are driven through the first and second joints (31).

## Patentansprüche

1. Erntevorsatz (10) zur Anbringung an einem Transportfahrzeug, aufweisend:
einen Hauptrahmen (13) mit einer Kupplung zur Montage auf dem Transportfahrzeug, durch die der Erntevorsatz (10) auf dem Transportfahrzeug in Vorwärtsrichtung getragen wird;
einen Mähbalken (17) an einem vorderen Ende des Hauptrahmens (13);
ein Erntegutübergabesystem (18) zum Transfer von geschnittenem Erntegut, das eine erste und eine zweite Seitenabdeckung (18A, 18B) umfasst, die in einer Richtung quer zur Vorwärtsrichtung verschiebbar sind, wobei jede Seitenabdeckung (18A, 18B) eine Vorderkante benachbart zum Mähbalken (17) und eine mittlere Abdeckung (18C) aufweist, die zwischen der ersten und der zweiten Seitenabdeckung (18A, 18B) angeordnet ist;
wobei der Hauptrahmen (13) einen Mittelabschnitt (23) an der Kupplung und erste und zweite Flügelabschnitte (24, 25) aufweist, beide mit einem jeweiligen Ende des Mittelabschnitts (23) durch Drehzapfen (26) verbunden, die eine erste und eine zweite Schwenkachse (26) für eine Schwenkbewegung bezogen auf den Mittelabschnitt (23) um die erste und zweite Schwenkachse (26) definieren, die jeweils allgemein parallel zur Vorwärtsrichtung positioniert sind, wobei die erste und die zweite Schwenkachse (26) in einer Ebene bei oder benachbart zum Mähbalken liegen, wobei der Mittelabschnitt (23) die mittlere Abdeckung (18C) trägt und der erste und zweite Flügelabschnitt (24, 25) die jeweilige erste und zweite Seitenabdeckung (18A, 18B) tragen;
eine Rückwand (27), die an einer Hinterkante der Seitenabdeckungen (18A, 18B) angeordnet ist und sich von dort nach oben zu einer Oberkante der Rückwand (27) erstreckt;
und eine Schnecke (28), die benachbart zur Oberkante der Rückwand (28) angeordnet ist und ein Schneckengewinde (29) umfasst, das an einem sich in Längsrichtung erstreckenden länglichen drehbaren Element (30) angebracht ist, das so angeordnet ist, dass die Drehung des Elements (30) das Schneckengewinde (29) in einer Richtung antreibt, um Erntegut nach innen in Richtung einer Mitte des Erntevorsatzes (10) zu befördern;
wobei die Schnecke (28) drei Abschnitte umfasst, die Ende an Ende entlang der Rückwand angeordnet sind mit einem Mittelabschnitt (28A) mit einem Mittelsteg (29A), einem ersten Endabschnitt (28B) mit einem ersten Endsteg (29B) und einem zweiten Endabschnitt mit einem zweiten Endsteg;
wobei der erste Endabschnitt (28B) mit einem ersten Ende des Mittelabschnitts (28A) durch ein erstes Gelenk (31) verbunden ist und der zweite Endabschnitt mit einem zweiten Ende des Mittelabschnitts (28A) durch ein zweites Gelenk verbunden ist;
wobei jedes der ersten und zweiten Gelenke (31) wirkt, um die Drehung von einem Abschnitt zu einem anderen Abschnitt an dem Gelenk (31) zu übertragen;
wobei jedes der ersten und zweiten Gelenke (31) eine Bewegung des einen Abschnitts bezogen auf den anderen Abschnitt in einer Richtung, die längs zur Schnecke (28) verläuft, ermöglicht;
wobei jedes der ersten und zweiten Gelenke (31) eine Änderung eines Winkels einer Achse des Elements eines Abschnitts bezogen auf eine Achse des Elements des anderen Abschnitts an dem Gelenk (31) ermöglicht;
**gekennzeichnet durch**
die Anordnung des ersten Gelenks (31) an einer Position, die von der ersten Achse (26) nach innen distanziert und über der mittleren Abdeckung (18C) angeordnet ist und das zweite Gelenk (31) an einer Position angeordnet ist, die von der zweiten Achse nach innen und über der mittleren Abdeckung (18C) distanziert ist; und
eine Rolle (19), die auf Rollenarmen (21) getragen wird, die am Hauptrahmen (13) montiert sind und sich nach vorne über den Mähbalken (17) erstrecken, wobei die Rolle (19) einen ersten Rollenarm (21) aufweist, der an einem ersten Ende des Mittelabschnitts (23) montiert ist, und über einen zweiten Rollenarm (21) verfügt, der an dem gegenüberliegenden zweiten Ende des Mittelabschnitts (23) vorhanden ist und wobei sich der erste Endsteg (29B) vom ersten Rollenarm (21) nach innen erstreckt und sich der zweite Endsteg vom zweiten Rollenarm (21) nach innen erstreckt.

2. Der Erntevorsatz (10) nach Anspruch 1, wobei die Rückwand (27) an der ersten und der zweiten Schwenkachse (26 in einen mittleren Wandabschnitt (27B) und erste und zweite Flügelwandabschnitte (27A) übergeht, so dass ein erster Raum (27X) zwischen dem mittleren Wandabschnitt (27B) und einem ersten Flügelwandabschnitt (27A) zunimmt und abnimmt, wenn sich der Mittelabschnitt (27B) und der erste Flügelabschnitt (27A) im Uhrzeigersinn und entgegen dem Uhrzeigersinn um die erste Schwenkachse (26) drehen, so dass ein zweiter Raum zwischen dem mittleren Wandabschnitt und einem zweiten Flügelwandabschnitt zunimmt und abnimmt, wenn sich der Mittelabschnitt und der zweite Flügel im Uhrzeigersinn und gegen den Uhrzeigersinn um die zweite Schwenkachse schwenken, wobei sich der erste Endsteg (29B) nach innen vom ersten Raum (27X) erstreckt, um das mit dem ersten Endsteg (29B) verbundene Erntegut am ersten Raum (27X) vorbei zum mittleren Wandabschnitt (27B) der Rückwand (27) zu befördern, und wobei sich der zweite Schneckengang nach innen vom zweiten Raum erstreckt, um das mit dem zweiten Endsteg verbundene Erntegut am zweiten Raum vorbei zum mittleren Wandabschnitt (27B) der Rückwand (27) zu befördern.

3. Der Erntevorsatz (10) nach einem der Ansprüche 1 bis 2, der eine Rolle (19) aufweist, die auf Rollenarmen (21) getragen wird, die am Hauptrahmen (13) montiert sind und sich nach vorne über den Mähbalken (17) erstrecken, wobei die Rolle (19) in einen mittleren Rollenabschnitt und einen ersten und zweiten Rollenabschnitt an jeweiligen Enden des mittleren Rollenabschnitts unterteilt ist, wobei jede Rolle eine Vielzahl von Zinkenreihen an winkelmäßig distanzierten Stellen aufweist, wobei die Zinkenreihen des Mittelabschnitts an dem ersten Ende in einer ersten radialen Ebene des Mittelabschnitts enden und wobei die Zinkenreihen des Mittelabschnitts an dem zweiten Ende in einer zweiten radialen Ebene des Mittelabschnitts enden und wobei sich der erste Steg über die erste radiale Ebene hinaus erstreckt und sich der zweite Steg über die zweite radiale Ebene hinaus erstreckt.

4. Der Erntevorsatz nach einem der Ansprüche 1 bis 3, wobei das erste Gelenk (31) eine erste Befestigungsklammer (31A) aufweist, die am ersten Ende des Mittelabschnitts (23) getragen wird, wo das erste Gelenk (31) am Mittelabschnitt (28A) der Schnecke (28) befestigt ist, wobei das zweite Gelenk (31) eine zweite Befestigungsklammer aufweist, die am zweiten Ende des Mittelabschnitts (23) getragen wird, wo das zweite Gelenk (31) am Mittelabschnitt (28A) der Schnecke (28), und wobei die ersten und zweiten Gelenke (31) eine Längsgleitbewegung des ersten und zweiten Endabschnitts der Schnecke (28) bezogen auf die ersten und zweiten Gelenke (31) ermöglichen, um eine Schwenkbewegung der Abschnitte des Erntevorsatzes (10) aufzunehmen.

5. Der Erntevorsatz (10) nach Anspruch 4, bei dem der Steg (29A) des mittleren Abschnitts (28A) der Schnecke (28) abnehmbar und austauschbar an den ersten und zweiten Gelenken (31) ist.

6. Der Erntevorsatz (10) nach Anspruch 5, bei dem wenigstens zwei Mittelabschnitte (28A) mit unterschiedlichen Stegabmessungen vorgesehen sind.

7. Der Erntevorsatz (10) nach einem der Ansprüche 1 bis 6, bei dem die Schnecke (28) von dem ersten Ende angetrieben wird, so dass der Mittelabschnitt (28A) und die Endabschnitte (28B) durch die ersten und zweiten Gelenke (31) angetrieben werden.

## Revendications

1. Tête de récolte (10) à fixer à un véhicule de transport, comprenant :
un cadre principal (13) avec un attelage pour le monter sur un véhicule de transport, par lequel la tête (10) est portée sur le véhicule de transport vers l' avant ;
une barre de coupe (17) à l'extrémité avant du cadre principal (13) ;
un système de transfert des produits récoltés (18) pour transférer une récolte coupée comprenant des premier et second tabliers latéraux (18A, 18B) mobiles dans le sens perpendiculaire à la marche avant, l'avant de chaque tablier latéral (18A, 18B) étant adjacent à la barre de coupe (17), et un tablier central (18C) disposé entre le premier et le second drapier latéral (18A, 18B) ;
le cadre principal (13) ayant une partie centrale (23) au niveau de l'attelage et des premières et secondes parties de l'aile (24, 25) reliées chacune à une extrémité de la partie centrale (23) par des pivots (26) définissant le premier et le second axe de pivotement (26) pour un mouvement pivotant par rapport à la partie centrale (23) autour du premier et du second axe du pivot (26), respectivement, chacun étant généralement parallèle à la marche avant, les premier et second axes de pivotement (26) se trouvant dans le même plan ou dans un plan adjacent à la barre de coupe, la partie centrale (23) supportant le tablier central (18C) et la première et la seconde partie de l'aile (24, 25) supportant le premier et le second tablier latéral (18A, 18B), respectivement ;
une paroi arrière (27) située au niveau du bord arrière des tabliers latéraux (18A, 18B) et s'étendant vers le haut à partir du bord arrière jusqu'au un bord supérieur de la paroi arrière (27) ;
et une tarière (28) adjacente au bord supérieur de la paroi arrière (28), comprenant une tarière à spire (29) montée sur un membre rotatif extensible en longueur (30) agencé de telle sorte que la rotation de ce membre (30) entraîne la tarière à spire (29) dans la direction nécessaire pour transporter la récolte vers l'intérieur, vers un centre de la tête (10) ;
la tarière (28) comprenant trois sections montées bout à bout le long de la paroi arrière (28) comprenant une section centrale (28A) avec une spire centrale (29A), une première section d'extrémité (28B) avec une première spire d'extrémité (29B) et une seconde section d'extrémité avec une seconde spire d'extrémité ;
la première section d'extrémité (28B) étant reliée à la première extrémité de la section centrale (28A) par une première articulation (31) et la seconde section d'extrémité étant reliée à la seconde extrémité de la section centrale (28A) par une seconde articulation ;
chacune des première et seconde articulations (31) agissant pour transférer la rotation d'une section à l'autre au niveau de l'articulation (31) ;
chacune des première et seconde articulations (31) permettant le mouvement de la première section par rapport à l'autre dans le sens de la longueur de la tarière (28) ;
chacune des première et seconde articulations (31) permettant de modifier l'angle de l'axe du membre d'une section par rapport à l'axe du membre de l'autre section au niveau de l'articulation (31) ;
la première articulation (31) étant disposée à l'intérieur du premier axe (26) et au-dessus du tablier central (18C), et la seconde articulation (31) étant disposée à l'intérieur du second axe et au-dessus du tablier central (18C) ; et
une bobine (19) portée par des bras de bobine (21) montés sur le cadre principal (13) et s'étendant vers l'avant sur la barre de coupe (17), la bobine (19) comprenant un premier bras de bobine (21) monté sur la première extrémité de la partie centrale (23) et un second bras de bobine (21) monté sur l'autre extrémité, à l'opposé de la partie centrale (23), la première spire (29B) se déployant à l'intérieur du premier bras de bobine (21) et la seconde spire se déployant à l'intérieur du second bras de bobine (21).

2. Tête de récolte (10) selon la revendication 1, la paroi arrière (27) étant séparée au niveau des premier et second axes de pivotement (26) en une partie centrale de la paroi (27B) et une première et une seconde partie de l'aile (27A) de sorte qu'un premier espace (27X) entre la partie centrale de la paroi (27B) et la première partie de l'aile (27A) augmente et diminue à mesure que la partie centrale (27B) et la première partie de l'aile (27A) pivotent dans le sens des aiguilles d'une montre et dans le sens inverse des aiguilles d'une montre autour du premier axe de pivotement (26) et de sorte qu'un second espace entre la partie centrale de la paroi et la seconde partie de l'aile augmente et diminue à mesure que la partie centrale et la partie de la seconde aile pivotent dans le sens des aiguilles d'une montre et dans le sens inverse des aiguilles d'une montre autour du second axe de pivotement, la première spire (29B) s'étendant à l'intérieur du premier espace (27X) pour transporter la récolte en faisant passer la première spire (29B) au-delà du premier espace (27X) vers la partie centrale (27B) de la paroi arrière (27) et la seconde spire s'étendant à l'intérieur du second espace pour transporter la récolte en faisant passer la seconde spire au-delà du second espace vers la partie centrale (27B) de la paroi arrière (27).

3. La tête de récolte (10) selon les revendications 1 et 2, comprenant une bobine (19) portée par des bras de bobine (21) montés sur le cadre principal (13) et s'étendant vers l'avant par-dessus la barre de coupe (17), la bobine (19) étant divisée en une partie centrale de la bobine et une première et une seconde extrémité de chaque côté de la partie centrale de la bobine, chaque partie de la bobine ayant plusieurs barres porte-dents disposés équi-angulairement autour de la bobine, les barres porte-dents de la partie centrale se terminant à la première extrémité dans un premier plan radial de la partie centrale et les barres porte-dents de la partie centrale se terminant à la seconde extrémité dans un second plan radial de la partie centrale, la première spire s'étendant au-delà du premier plan radial et la seconde spire s'étendant au-delà du second plan radial.

4. Tête de récolte selon les revendications 1 à 3, la première articulation (31) comprenant une première patte de fixation (31A) portée par la première extrémité de la partie centrale (23), la première articulation (31) étant fixé à la section centrale (28A) de la tarière (28), dans la seconde articulation (31) comprenant une seconde patte de fixation portée par la seconde extrémité de la partie centrale (23), la seconde articulation (31) étant fixée à la section centrale (28A) de la tarière (28), la première et la seconde articulation (31) permettant un mouvement coulissant dans le sens de la longueur de la première et de la seconde extrémité de la tarière (28) par rapport à la première et à la seconde articulation (31) pour recevoir le mouvement pivotant des parties de la tête (10).

5. Tête de récolte (10) selon la revendication 4, la spire (29A) de la section centrale (28A) de la tarière (28) étant amovible et remplaçable à partir de la première et de la seconde charnière (31).

6. Tête de récolte (10) selon la revendication 5, au moins deux sections centrales (28A) étant prévues avec des spires de dimensions différentes.

7. Tête de récolte (10) selon les revendications 1 à 6, la tarière (28) étant entraînée à partir de la première extrémité de sorte que la section centrale (28A) et les sections d'extrémité (28B) sont entraînées à travers la première et la seconde charnière (31).
